# EUROPEAN PATENT SPECIFICATION

(11) **EP 4 197 770 B1**
(45) Date of publication and mention of the grant of the patent: **10.07.2024**
(21) Application number: 22203771.5
(22) Date of filing: 26.10.2022
(51) Int. Cl.: B29D 30/14, B29D 30/28

(54) **PRODUCTION METHOD FOR TIRE AND RAW COVER FORMING APPARATUS**
HERSTELLUNGSVERFAHREN FÜR REIFEN UND VORRICHTUNG ZUR FORMUNG EINER ROHABDECKUNG
PROCÉDÉ DE PRODUCTION DE PNEU ET APPAREIL DE FORMATION DE REVÊTEMENT BRUT

(30) Priority: 20.12.2021 JP 2021206476
(43) Date of publication of application: 21.06.2023
(73) Proprietor: Sumitomo Rubber Industries, Ltd., Kobe-shi, Hyogo 651-0072 (JP)
(72) Inventor: NAGASE, Hiroki, Kobe-shi, 651-0072 (JP); KONISHI, Takuma, Kobe-shi, 651-0072 (JP); SANO, Jumpei, Kobe-shi, 651-0072 (JP)
(74) Representative: Manitz Finsterwald Patent- und Rechtsanwaltspartnerschaft mbB

(56) References cited:
- JP-A- 2006 334 901
- JP-A- 2007 076 221
- JP-A- 2012 051 294

## Description

### BACKGROUND OF THE INVENTION

### Field of the Invention

The present disclosure relates to a production method for a tire and a raw cover forming apparatus.

### Background Art

Japanese Laid-Open Patent Publication No. 2012-51294 discloses an attaching roll, for a sheet-shaped member, which is used in a tire production apparatus. As a sheet-shaped member, a tire component such as an inner liner and a rubber sheet is used. The attaching roll is a roll for attaching a sheet-shaped member to an attachment target member. The attaching roll for a sheet-shaped member is characterized in that a plurality of micro protrusions are formed on the entirety of an outer circumferential surface thereof. The attaching roll for a sheet-shaped member can be said to be able to inhibit air from gathering between a sheet-shaped member and an attachment target member and forming a lump. Accordingly, it is said that air can be inhibited from accumulating inside a tire.

Meanwhile, during production of a tire, a rubber strip is fed toward a forming drum. The fed rubber strip is wound on the forming drum or a material wound on the forming drum, and a raw cover is formed. The present inventors desire to strongly pressure-bond the rubber strip to the forming drum or an attachment target object such as a material wound on the forming drum. The features of the preamble of the independent claims are known from JP 2007 076221 A.

### SUMMARY OF THE INVENTION

The present invention is set out in the appended claims. A production method for a tire disclosed herein includes a winding step of winding a rubber strip fed toward a forming drum, along an attachment target object. The winding step includes an attaching process of pressing spike pins against the rubber strip fed toward the forming drum to attach the rubber strip along an outer circumferential surface of the attachment target object, in at least a part of the winding step.

A raw cover forming apparatus disclosed herein includes: a feeding device configured to feed a rubber strip toward a forming drum; and a pressing member provided downstream of the feeding device in a feeding direction of the rubber strip. The pressing member is provided with a plurality of spike pins for pressing the rubber strip against an attachment target object.

According to the production method and the forming apparatus, pressure-bonding strength of the rubber strip during formation of a raw cover is improved.

### BRIEF DESCRIPTION OF THE DRAWINGS

FIG. 1 is a perspective view of a raw cover 90;
FIG. 2 is a side view of a raw cover forming apparatus 10;
FIG. 3 is a schematic diagram of the raw cover forming apparatus 10;
FIG. 4 is a side view of a pressing member 30;
FIG. 5 is a schematic diagram of a rotation member 30A;
FIG. 6 is a cross-sectional view taken along a line VI-VI in FIG. 5;
FIG. 7 is a cross-sectional view of a base rubber 94 and a rubber strip 95;
FIG. 8 is a schematic diagram of a rotation member 30B;
FIG. 9 is a schematic diagram of a rotation member 30C in which spike pins 41 are used;
FIG. 10 is a schematic diagram of a plate 50; and
FIG. 11 is a side view of the plate 50.

### DETAILED DESCRIPTION

Hereinafter, an embodiment of the present disclosure will be described with reference to the drawings. The present disclosure is not limited to the following embodiments. Each drawing is schematically drawn and does not necessarily reflect the actual one. In addition, each drawing shows only one example, and does not limit the present disclosure unless otherwise specified. Moreover, members and parts that perform the same effect are designated as appropriate by the same reference characters, and the redundant description thereof is omitted.

### <Raw Cover 90>

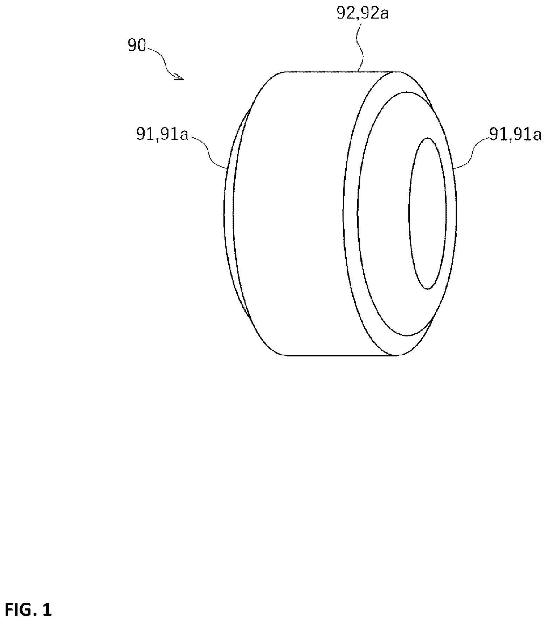

A production process for a tire includes a step of forming a raw cover 90. FIG. 1 is a perspective view of the raw cover 90. The raw cover 90 is an unvulcanized tire before vulcanization molding, and is also referred to as a green tire. The raw cover 90 is a tubular member obtained by attaching an unvulcanized sidewall rubber and tread rubber to a base material such as a bead wire, a carcass, a breaker, and a wire. As shown in FIG. 1, the raw cover 90 includes a first cover 91 which forms an inner surface and side surfaces, and a second cover 92 which forms an outer surface.

The first cover 91 is a cylindrical member. The first cover 91 includes an inner liner, a carcass, and sidewall rubbers 91a. The first cover 91 further includes a pair of beads at end portions on the radially inner side thereof. The first cover 91 is prepared, for example, by the following procedure. The inner liner is wound on a forming drum. The carcass is attached to the inner liner wound on the forming drum to form a cylindrical member. The beads are mounted on end portions of the cylindrical member. Each bead is wound up from the axial end portion of the cylindrical member. The sidewall rubber 91a is wound and formed on the portion of the cylindrical member where the bead is wound up.

The second cover 92 is a cylindrical member. The second cover 92 is formed such that the inner diameter thereof is larger than the outer diameter of the first cover 91. The second cover 92 includes a breaker, a band, a base rubber, and a tread rubber 92a. The second cover 92 is formed, for example, by the following procedure. The breaker, the band, and the base rubber are wound in this order on a forming drum. Next, the tread rubber 92a is wound and formed on the base rubber.

After the tread rubber 92a is formed, the second cover 92 is moved to the radially outer side of the first cover 91. The first cover 91 is inflated toward the radially outer side and pressure-bonded to the second cover 92. Accordingly, the raw cover 90 is formed. Hereinafter, a method for forming the second cover 92 using the raw cover forming apparatus 10 will be described as an example. The rubber strip 95 is wound on an attachment target object by the raw cover forming apparatus 10.

### <Raw Cover Forming Apparatus 10>

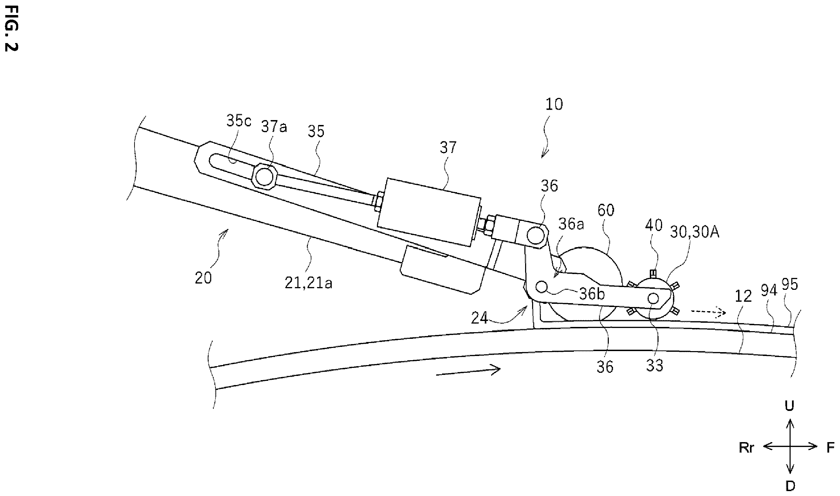

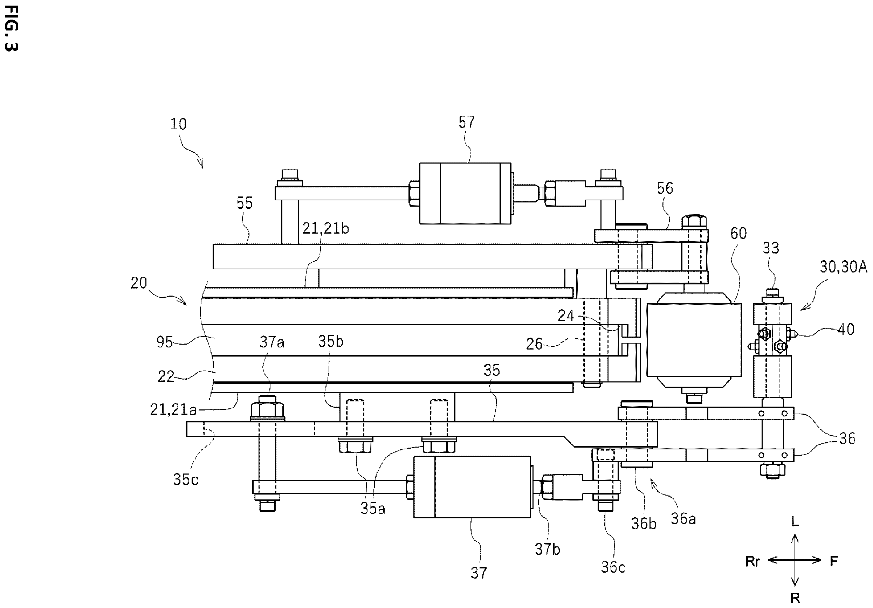

FIG. 2 is a side view of the raw cover forming apparatus 10. FIG. 2 shows a state where the tread rubber 92a (see FIG. 1) of the second cover 92 is formed by the raw cover forming apparatus 10. Specifically, FIG. 2 shows a state where the rubber strip 95 is attached to the base rubber 94 wound on a forming drum 12, by the raw cover forming apparatus 10. FIG. 3 is a schematic diagram of the raw cover forming apparatus 10. FIG. 3 shows the raw cover forming apparatus 10 in a plan view as seen from the side opposite to the base rubber 94 to which the rubber strip 95 is attached. Hereinafter, a transport direction in which the rubber strip 95 is transported on the base rubber 94 is defined as a front side, and is indicated by reference character F. Up, down, left, and right mean up, down, left, and right in the case of being seen from a rear side (reference character Rr) toward the front side. The up, down, left, and right directions are indicated by arrows U, D, L, and R, respectively, in the drawings. However, these directions are merely directions for convenience of description, and do not limit the installation directions of the raw cover forming apparatus 10, the forming drum 12, the base rubber 94, the rubber strip 95, etc. In FIG. 2, the rotation direction of the forming drum 12 is indicated by an arrow.

In this embodiment, the rubber strip 95 forms the tread rubber 92a of the second cover 92 (see FIG. 1). The rubber strip 95 is an elongated long rubber sheet that is narrower than the width of the second cover 92 where the tread rubber 92a (see FIG. 1) is attached. The rubber strip 95 is wound along the circumferential direction of the forming drum 12 a required number of times. The forming drum 12 is a drum for forming the second cover 92, and has a circular outer circumferential surface. As shown in FIG. 2, the raw cover forming apparatus 10 includes a feeding device 20 and a pressing member 30.

### <Feeding Device 20>

The feeding device 20 feeds the rubber strip 95 from the raw cover forming apparatus 10 toward the forming drum 12. In this embodiment, as shown in FIG. 3, the feeding device 20 has a transport belt 22 and a feed port 24. The transport belt 22 transports the rubber strip 95 along the transport direction (a dotted arrow in the drawing). The transport belt 22 is provided between a pair of side walls 21 along the transport direction. One end of the transport belt 22 is hooked and turned back over a roller 26 which is provided upstream of the feed port 24 of the feeding device 20. The transported rubber strip 95 is fed from the feed port 24, which is located downstream of the one end of the transport belt 22, toward the forming drum 12.

As shown in FIG. 2, the rubber strip 95 fed from the feed port 24 of the feeding device 20 is placed on the surface of the base rubber 94 on the forming drum 12. While the rubber strip 95 is being fed, the forming drum 12 rotates at a constant speed. By rotating the forming drum 12 in this direction, the rubber strip 95 is transported on the base rubber 94 in the transport direction. The transport direction of the rubber strip 95 is indicated by the dotted arrow. The transported rubber strip 95 is pressed onto the base rubber 94 by the pressing member 30.

### <Pressing Member 30>

The pressing member 30 is provided downstream of the feeding device 20 in the feeding direction of the rubber strip 95. The pressing member 30 is configured such that the height thereof with respect to the forming drum 12 is changeable. By raising and lowering the pressing member 30, the rubber strip 95 fed in the feeding direction is pressed. In this embodiment, the pressing member 30 is driven by a cylinder mechanism 37, and the height thereof with respect to the forming drum 12 is changed. The pressing member 30 is mounted on one side wall 21a of the feeding device 20 via a support member 35 which is mounted on the side wall 21a and an arm 36 which is supported by the support member 35.

In this embodiment, the support member 35 is a plate-shaped member that is long in the transport direction. As shown in FIG. 3, the support member 35 is mounted on the side wall 21a of the feeding device 20 by bolts 35a. A spacer 35b is provided between the support member 35 and the side wall 21a, so that a required interval is provided between the support member 35 and the side wall 21a. The support member 35 supports the arm 36 and the cylinder mechanism 37. The arm 36 is supported by one end portion of the support member 35.

The arm 36 is a plate-shaped member that is bent in a substantially L-shape (see FIG. 2). Two arms 36 are provided in the width direction, and sandwich the support member 35 from both sides in the width direction. As shown in FIG. 2, a corner portion 36a of each bent arm 36 is supported by the end portion of the support member 35 via a shaft 36b. A bearing which is not shown is provided between the shaft 36b and the arm 36, and the corner portion 36a of the arm 36 is rotatably supported by the end portion of the support member 35. The pressing member 30 is provided at end portions of the arms 36, and the cylinder mechanism 37 is provided at another end portion of the arm 36. The arm 36 and the cylinder mechanism 37 are mounted via a shaft 36c. A bearing which is not shown is provided between the shaft 36c and the cylinder mechanism 37, and the cylinder mechanism 37 is configured to be rotatable with respect to the arm 36.

The cylinder mechanism 37 is mounted at an end portion thereof that is opposite to the end portion on which the arm 36 is mounted, on the support member 35 by a bolt 37a. This end portion of the cylinder mechanism 37 is rotatably mounted on the bolt 37a via a bearing which is not shown. The support member 35 has an elongated hole 35c formed along the longitudinal direction thereof. The bolt 37a is inserted through the hole 35c and fixed to the support member 35. The bolt 37a can be fixed at a desired position in the longitudinal direction of the hole 35c. Therefore, the position at which the cylinder mechanism 37 is fixed to the support member 35 can be set as appropriate.

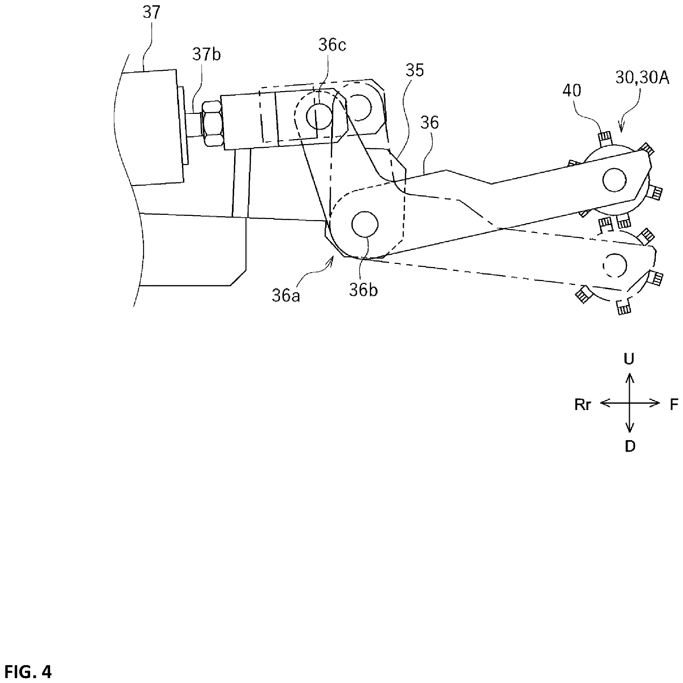

The pressing member 30 is configured to be able to be raised and lowered by the cylinder mechanism 37. FIG. 4 is a side view of the pressing member 30. FIG. 4 schematically shows a state where the pressing member 30 is raised or lowered. In FIG. 4, the state where the pressing member 30 is raised to an uppermost position with respect to the forming drum 12 (see FIG. 2) is shown by a solid line. In FIG. 4, the state where the pressing member 30 is lowered to a lowermost position with respect to the forming drum 12 is shown by an alternate long and two short dashes line. Each arm 36 is rotationally driven about the shaft 36b which is inserted through the corner portion 36a. The corner portion 36a is supported by the support member 35 via the shaft 36b. As shown in FIG. 4, when a piston rod 37b of the cylinder mechanism 37 is retracted, the pressing member 30 is raised with respect to the forming drum 12. When the piston rod 37b of the cylinder mechanism 37 is extended, the pressing member 30 is lowered with respect to the forming drum 12. The pressing member 30 may be configured such that the raised and lowered positions thereof are controlled as appropriate according to the height at which the rubber strip 95 is wound. The raising and lowering of the pressing member 30 may be controlled by a control device which is not shown. The control device may, for example, be connected to the cylinder mechanism 37 and be configured such that the timing and pressure at which the pressing member 30 is pressed against the rubber strip 95 are set as appropriate. The control device may be provided with a pressure gauge for measuring the pressure at which the pressing member 30 presses the rubber strip 95. The control device may adjust the raised and lowered positions of the pressing member 30 according to the number of turns of the wound rubber strip 95, etc., such that the pressure at which the rubber strip 95 is pressed is constant. The pressure at which the pressing member 30 is pressed against the rubber strip 95 is not particularly limited, and is, for example, preferably not less than 0.2 MPa and not greater than 1.0 MPa.

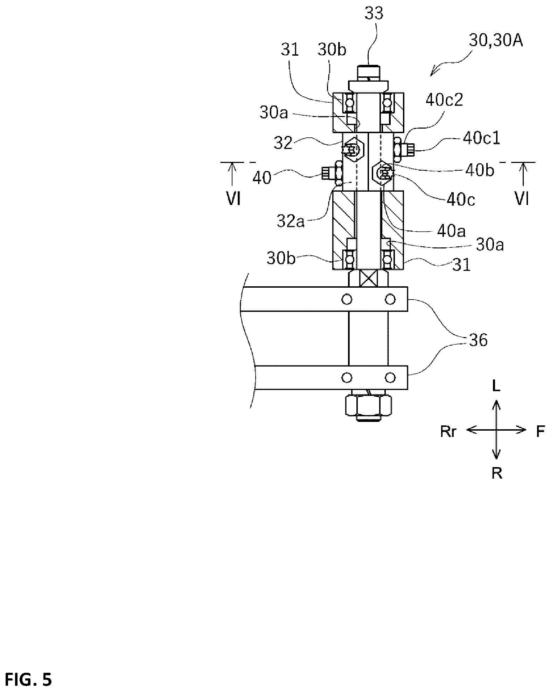

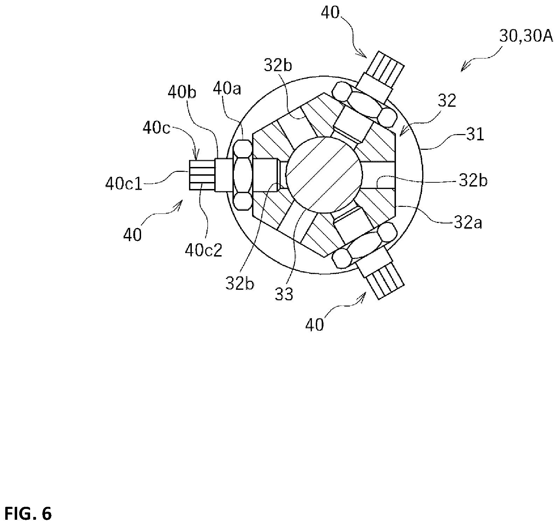

In this embodiment, the pressing member 30 is a rotation member 30A which is rotatable along the feeding direction. FIG. 5 is a schematic diagram of the rotation member 30A. FIG. 6 is a cross-sectional view taken along a line VI-VI in FIG. 5. The rotation member 30A is a member having a rotation axis that is set such that the member rotates along the transport direction of the rubber strip 95. As shown in FIG. 5, the rotation member 30A is mounted on the arms 36 via a shaft 33. The rotation member 30A is provided with an insertion hole 30a through which the shaft 33 is inserted. Bearings 30b are provided at both end portions of the insertion hole 30a. The rotation member 30A and the shaft 33 are mounted via the bearings 30b, and the rotation member 30A is rotatable with respect to the shaft 33.

As shown in FIG. 5 and FIG. 6, the rotation member 30A has end portions 31 and a center portion 32. The center portion 32 is a portion formed inward of each end portion 31 in the longitudinal direction of the rotation member 30A. The center portion 32 is formed so as to have a smaller diameter than each end portion 31. In other words, the center portion 32 is recessed with respect to each end portion 31 in the longitudinal direction of the rotation member 30A. The radially outer shape of each end portion 31 is a circular column shape. The radially outer shape of the center portion 32 is a hexagonal shape, and six flat surfaces 32a are formed thereon along the circumferential direction. A hole 32b is formed in each flat surface 32a. An internal thread is formed on the inner circumferential surface of each hole 32b. The width of the center portion 32 is substantially equal to the width of the rubber strip 95, and the center portion 32 is formed at a position overlapping the rubber strip 95 in the transport direction (see FIG. 3).

The pressing member 30 (in this embodiment, the rotation member 30A) is provided with a plurality of spike pins 40. Each spike pin 40 is a pin for pressing the rubber strip 95 toward the attachment target object (in this embodiment, the base rubber 94). The spike pin 40 extends from the surface of the pressing member 30 toward the radially outer side.

The shape and dimensions of each spike pin 40 are not particularly limited. In this embodiment, as shown in FIG. 6, each spike pin 40 has a base portion 40a, a root portion 40b, and a distal end portion 40c. The diameters of the root portion 40b and the distal end portion 40c of the spike pin 40 are preferably, for example, in the range of not less than 2 mm and not greater than 3 mm. In this embodiment, each spike pin 40 is formed so as to be longer than the thickness of the rubber strip 95. For example, the length from the flat surface 32a to the distal end of the spike pin 40 is preferably longer than the thickness of the rubber strip 95. Also, the length from the proximal end of the root portion 40b, excluding the base portion 40a, to the distal end of the distal end portion 40c in the spike pin 40 may be longer than the thickness of the rubber strip 95. The base portion 40a is a portion that is mounted in the hole 32b of the rotation member 30A. The base portion 40a has a bolt shape having an external thread corresponding to the internal thread of the hole 32b. The root portion 40b extends toward the side opposite to the external thread of the base portion 40a. The root portion 40b is formed in a circular column shape.

In this embodiment, the distal end portion 40c has a flat portion 40c1 at the distal end thereof. A cross-sectional shape of the distal end portion 40c is a polygonal shape. A protrusion 40c2 is formed on the side surface of the distal end portion 40c so as to protrude in the radially outward direction thereof. Here, the protrusion 40c2 is formed with an acute angle (see FIG. 5). Six protrusions 40c2 are formed along the circumferential direction. The distal end portion 40c has a uniform cross-sectional shape from the proximal end to the distal end thereof. Therefore, the shape of flat portion 40c1 at the distal end of the spike pin 40 is a polygonal shape. In addition, the protrusions 40c2 are formed at the flat portion 40c1 so as to protrude in the radially outward direction thereof. The flat portion 40c1 at the distal end and a cross-section of the distal end portion 40c are formed in a star shape.

As shown in FIG. 6, the plurality of spike pins 40 are provided on the outer circumferential surface of the rotation member 30A. In this embodiment, each spike pin 40 is provided on the flat surface 32a of the center portion 32 having a hexagonal column shape. The spike pin 40 is mounted in the hole 32b formed in the flat surface 32a of the center portion 32. The plurality of spike pins 40 may be provided in a plurality of rows along the axial direction of the rotation member 30A. As shown in FIG. 5, in this embodiment, the plurality of spike pins 40 are provided in two rows along the axial direction of the rotation member 30A. The number of rows in which the spike pins 40 are provided may be set as appropriate according to the width of the rubber strip 95, etc. The number of rows in which the spike pins 40 are provided is not particularly limited, and is, for example, two to five.

In this embodiment, each of the rows of the spike pins 40 includes three spike pins 40 provided at equal intervals along the circumferential direction. The pitch of the spike pins 40 is not particularly limited, and is, for example, preferably not less than 15 mm and not greater than 25 mm in the circumferential direction of the center portion 32. The three spike pins 40 are respectively mounted on the flat surfaces 32a that are different from each other and are separated from each other by one flat surface 32a. Therefore, the three spike pins 40 are arranged at equal intervals along the circumferential direction of the rotation member 30A.

In this embodiment, the spike pins 40 are provided at positions different from each other in the circumferential direction, in the rows adjacent to each other along the axial direction of the rotation member 30A. Here, as shown in FIG. 5, each spike pin 40 is provided on the flat surface 32a different from the flat surfaces 32a on which the spike pins 40 in the adjacent row are provided. Therefore, the spike pins 40 in one row and the spike pins 40 in another row are alternately arranged on the six flat surfaces 32a which are aligned in the circumferential direction.

### <Pressing Roller 60>

In this embodiment, as shown in FIG. 2 and FIG. 3, the raw cover forming apparatus 10 further includes a pressing roller 60. In FIG. 2, a support mechanism, etc., of the pressing roller 60 are not shown in detail. The pressing roller 60 is a roller for pressing the rubber strip 95 fed from the feeding device 20, toward the forming drum 12 before the rubber strip 95 is pressed by the pressing member 30. The pressing roller 60 is provided between the feeding device 20 and the pressing member 30. The pressing roller 60 is configured such that the height thereof with respect to the forming drum 12 is changeable. Accordingly, the pressing roller 60 can press the fed rubber strip 95 before the rubber strip 95 is attached by the pressing member 30. The pressing roller 60 is not particularly limited, and a roller made of a resin is used as the pressing roller 60 from the viewpoint of providing a flexible surface for pressing the rubber strip 95.

As shown in FIG. 3, in this embodiment, the pressing roller 60 is driven by a cylinder mechanism 57. The height of the pressing roller 60 with respect to the forming drum 12 is changed by the cylinder mechanism 57. The pressing roller 60 is mounted on one side wall 21b of the feeding device 20 via a support member 55 which is mounted on the side wall 21b and arms 56 which are supported by the support member 55. The pressing roller 60 is mounted on end portions of the arms 56, and the cylinder mechanism 57 is mounted on another end portion of the arm 56. The pressing roller 60 is raised and lowered by driving the arms 56 by the cylinder mechanism 57. The support member 55, the arms 56, and the cylinder mechanism 57 on the pressing roller 60 side can have the same configuration as the support member 35, the arms 36, and the cylinder mechanism 37 on the pressing member 30 side, and thus the detailed description thereof is omitted.

The pressing roller 60 is formed so as to be wider than the width of the rubber strip 95 and the width of the center portion 32 of the pressing member 30. Accordingly, the pressing roller 60 can press the entire surface in the width direction of the rubber strip 95. Similar to the pressing member 30, the pressing roller 60 may be configured such that the raised and lowered positions thereof are controlled as appropriate according to the height at which the rubber strip 95 is wound. The raising and lowering of the pressing roller 60 may be controlled by a control device which is not shown. The pressure at which the pressing roller 60 is pressed against the rubber strip 95 is not particularly limited, and is, for example, preferably not less than 0.2 MPa and not greater than 1.0 MPa.

The raw cover 90 is formed using the above-described raw cover forming apparatus 10. In addition, as described above, the production method for a tire includes the step of forming the raw cover 90. The production method for a tire includes a winding step of winding the rubber strip 95 fed toward the forming drum 12, along the attachment target object. In the winding step, as shown in FIG. 2, the rubber strip 95 is fed from the feeding device 20, pressed by the pressing member 30, and wound along the attachment target object. In the winding step, the forming drum 12 is rotated along the circumferential direction by a drive device, which is not shown, and is configured to move in the axial direction thereof.

The winding step includes an attaching process of attaching the rubber strip 95 along the outer circumferential surface of the forming drum 12 in at least a part of the winding step. In the attaching process, as shown in FIG. 2, the rubber strip 95 is attached along the outer circumferential surface of the forming drum 12 by pressing the spike pins 40 against the rubber strip 95. In this embodiment, in the attaching process, the spike pins 40 which are provided on the outer circumferential surface of the rotation member 30A are pressed against the rubber strip 95, so that the rubber strip 95 is attached to the base rubber 94.

In this embodiment, the winding step includes a pressing process of pressing the rubber strip 95 against the base rubber 94. The pressing process is executed by the pressing roller 60 which is provided upstream of the pressing member 30 in the transport direction of the rubber strip 95. Therefore, the attaching process is executed after the rubber strip 95 is pressed in the pressing process. The rubber strip 95 fed from the feeding device 20 is transported along the transport direction, pressed by the pressing roller 60, and then pressed by the spike pins 40 of the pressing member 30, whereby the rubber strip 95 is attached to the base rubber 94.

In this embodiment, in the winding step, the attaching process is executed at the start of winding the rubber strip 95 along the base rubber 94. The pressing process is similarly executed at the start of winding the rubber strip 95 along the forming drum 12. First, the position of the forming drum 12 is adjusted such that the position at which winding of the rubber strip 95 is started is below the pressing roller 60 and the rotation member 30A as the pressing member 30. Next, the rubber strip 95 is fed from the feeding device 20 to the position, on the base rubber 94, at which winding of the rubber strip 95 is started. At the start of winding the rubber strip 95, the pressing roller 60 and the rotation member 30A are lowered by the cylinder mechanisms 37 and 57. When the pressing roller 60 is lowered, the rubber strip 95 is pressed against the base rubber 94. When the rotation member 30A is lowered in this state, the rubber strip 95 is pressure-bonded to the base rubber 94 by the rotation member 30A.

After the rubber strip 95 is pressure-bonded to the base rubber 94 at the position at which winding of the rubber strip 95 is started, winding of the rubber strip 95 is started. In this embodiment, although not particularly limited, the above-described attaching process is executed at the start of winding the rubber strip 95, but the attaching process is not executed in the middle of the winding step in which the winding has been started. In the middle of the winding step, the rotation member 30A and the pressing roller 60 are raised by the cylinder mechanisms 37 and 57, respectively. The rubber strip 95 is wound on the base rubber 94 along the circumferential direction a required number of times. When the rubber strip 95 is wound in the winding step, the forming drum 12 is moved at a predetermined speed in a predetermined direction in the axial direction of the forming drum 12 while being rotated in the circumferential direction thereof. Accordingly, the rubber strip 95 is wound at a constant pitch on the base rubber 94 in the width direction thereof. The rubber strip 95 may be wound on the base rubber 94 in an overlapping manner a plurality of times by reciprocating the forming drum 12 along the axial direction thereof.

In this embodiment, in the winding step, the attaching process is also executed at the end of winding the rubber strip 95 along the base rubber 94. Similar to the start of winding the rubber strip 95 on the base rubber 94, the pressing roller 60 and the rotation member 30A are lowered by the cylinder mechanisms 37 and 57 at the end of winding the rubber strip 95. The rubber strip 95 is pressed against the base rubber 94 by the pressing roller 60, and pressure-bonded to the base rubber 94 by the spike pins 40 which are provided on the outer circumferential surface of the rotation member 30A.

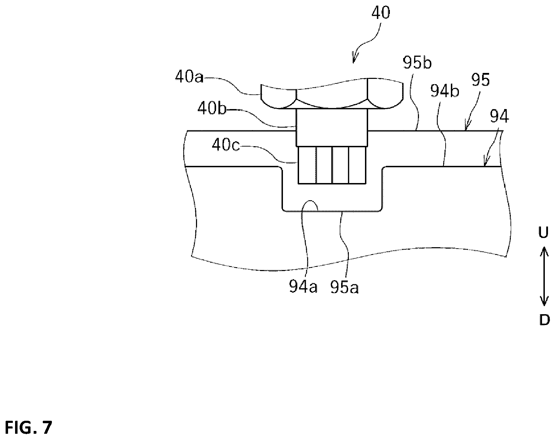

In this embodiment, each spike pin 40 is formed so as to be longer than the thickness of the rubber strip 95. Accordingly, a portion, of the rubber strip 95, against which the spike pin 40 is pressed can partially enter the base rubber 94 as the attachment target object. FIG. 7 is a cross-sectional view of the base rubber 94 and the rubber strip 95. In FIG. 7, the hatching of cross-sections of the base rubber 94 and the rubber strip 95 is omitted. FIG. 7 shows the interface between the base rubber 94 and the rubber strip 95 at the portion against which the spike pin 40 is pressed. As shown in FIG. 7, when the spike pin 40 is pressed against the rubber strip 95, a projection 95a can be formed in the rubber strip 95 so as to protrude on a surface thereof that is opposite to the surface against which the spike pin 40 is pressed. Accordingly, a recess 94a can be formed in the base rubber 94 so as to be recessed by an amount by which the rubber strip 95 protrudes. At the portion where the projection 95a and the recess 94a are formed, the rubber strip 95 deeply enters the base rubber 94.

In the above-described embodiment, the raw cover forming apparatus 10 which is used for forming the raw cover 90 includes the feeding device 20 which feeds the rubber strip 95 toward the forming drum 12, and the pressing member 30 which is provided downstream of the feeding device 20 in the feeding direction of the rubber strip 95. The pressing member 30 is provided with the plurality of spike pins 40 for pressing the rubber strip 95 against the attachment target object (in this embodiment, the base rubber 94). In the attaching process of attaching the rubber strip 95 along the outer circumferential surface of the attachment target object, the spike pins 40 are pressed against the rubber strip 95 fed from the forming drum 12. The attaching process is executed in at least a part of the winding step of winding the rubber strip 95 fed toward the forming drum 12, along the attachment target object. In the attaching process, the pressure-bonding strength of the rubber strip 95 when the rubber strip 95 is pressure-bonded to the attachment target object is improved by pressing the spike pins 40 against the rubber strip 95.

In the above-described embodiment, the pressing member 30 is the rotation member 30A which is rotatable along the feeding direction. The plurality of spike pins 40 are provided on the outer circumferential surface of the rotation member 30A. In the attaching process, the rotation member 30A having the spike pins 40 provided on the outer circumferential surface thereof is pressed against the rubber strip 95 wound along the outer circumferential surface of the attachment target object. The spike pins 40 are pressed against the rubber strip 95 while the rotation member 30A is being rotated. Accordingly, while the rubber strip 95 is being transported in the transport direction, the spike pins 40 are continuously pressed against the rubber strip 95. Therefore, the rubber strip 95 is easily pressure-bonded to the attachment target object with constant strength. As a result, the rubber strip 95 can be stably pressure-bonded to the attachment target object.

In the above-described embodiment, the plurality of spike pins 40 are provided in a plurality of rows along the axial direction of the rotation member 30A. Accordingly, the spike pins 40 are widely pressed against the rubber strip 95 in the width direction. As a result, the pressure-bonding strength of the rubber strip 95 when the rubber strip 95 is pressure-bonded to the attachment target object can be improved.

In the above-described embodiment, the spike pins 40 are provided at positions different from each other in the circumferential direction, in the rows adjacent to each other along the axial direction. Therefore, the spike pins 40 are pressed in a well-balanced manner against the rubber strip 95 in the width direction of the rubber strip 95 along the transport direction. Accordingly, the pressure-bonding strength of the rubber strip 95 when the rubber strip 95 is pressure-bonded to the attachment target object is less likely to be varied.

In the above-described embodiment, each spike pin 40 is formed so as to be longer than the thickness of the rubber strip 95. Accordingly, the portion, of the rubber strip 95, against which the spike pin 40 is pressed can partially enter the base rubber 94 as the attachment target object. The projection 95a of the rubber strip 95 and the recess 94a of the base rubber 94 which are formed thus cannot return completely when the spike pin 40 is pulled out, so that the deformation of the rubber strip 95 and the base rubber 94 can remain. Therefore, at not only a surface 95b of the rubber strip 95 and a surface 94b of the base rubber 94 but also the interface between the projection 95a of the rubber strip 95 and the recess 94a of the base rubber 94, these members are pressure-bonded to each other. As a result, the pressure-bonding strength between the rubber strip 95 and the attachment target object (base rubber 94) can be improved.

In the above-described embodiment, each spike pin 40 has the flat portion 40c1 at the distal end thereof. Owing to this configuration, even if the spike pin 40 is pressed against the rubber strip 95, the spike pin 40 is less likely to penetrate the rubber strip 95. Therefore, the spike pin 40 can be more deeply pressed into the rubber strip 95. As a result, the pressure-bonding strength of the rubber strip 95 when the rubber strip 95 is pressure-bonded to the attachment target object can be improved.

In the above-described embodiment, the flat portion 40c1 has a polygonal shape. Owing to this configuration, at the portion where the rubber strip 95 enters the base rubber 94, the contact area of the interface therebetween is likely to be large. As a result, the pressure-bonding strength between the rubber strip 95 and the base rubber 94 can be improved. Furthermore, in the above-described embodiment, the shape of the flat portion 40c1 has the protrusions 40c2 protruding toward the radially outward direction. Accordingly, at the portion where the rubber strip 95 enters the base rubber 94, the shape of the interface therebetween is likely to be complicated, so that the pressure-bonding strength between the rubber strip 95 and the base rubber 94 can be further improved.

In the above-described embodiment, the raw cover forming apparatus 10 further includes, between the feeding device 20 and the pressing member 30, the pressing roller 60 whose height with respect to the forming drum 12 is changeable. The winding step includes the pressing process of pressing the rubber strip 95 fed toward the forming drum 12, against the attachment target object by the pressing roller 60. The attaching process is executed after the rubber strip 95 is pressed against the attachment target object in the pressing process. By pressing the rubber strip 95 against the attachment target object by the pressing roller 60 before the attaching process, for example, the air between the rubber strip 95 and the base rubber 94 can be easily discharged. As a result, the attaching process can be executed in a state where the rubber strip 95 and the base rubber 94 are in closer contact with each other, so that the pressure-bonding strength between the rubber strip 95 and the base rubber 94 can be further improved.

In the above-described embodiment, in the winding step, the attaching process is executed at the start of winding the rubber strip 95 fed toward the forming drum 12, along the attachment target object. In addition, the attaching process is executed at the end of winding the rubber strip 95 fed toward the forming drum 12, along the attachment target object. The attaching process is not executed in the middle of the winding step. As described above, for example, the attaching process can be selectively executed in the winding step. For example, the attaching process can be executed at the positions at which winding of the rubber strip 95 is started and ended and at which the rubber strip 95 and the attachment target object are likely to be peeled from each other. Accordingly, the rubber strip 95 is less likely to be peeled off from the attachment target object.

The timing at which the attaching process is executed is not limited to the above-described start and end of winding. For example, the attaching process may be executed continuously or intermittently while the rubber strip 95 is being wound. For example, in the case where the material forming the rubber strip 95 is not easily pressure-bonded to the attachment target object, the attaching process may be executed for a long time, and in the case where the material forming the rubber strip 95 is easily pressure-bonded to the attachment target object, the attaching process may be executed for a short time. As described above, the timing at which the attaching process is executed may be set as appropriate.

The pressures of the pressing member 30 (in this embodiment, the rotation member 30A) and the pressing roller 60 when the attaching process is executed may be set as appropriate. For example, these pressures may be set such that the rubber strip 95 is strongly attached to the base rubber 94 at the start of winding and the end of winding in the winding step and is weakly attached to the base rubber 94 in the middle of the winding step. In addition, the attaching process and the pressing process do not necessarily need to be executed at the same time. The timing at which the attaching process is executed and the timing at which the pressing process is executed may be different in the winding step. As described above, the timings and intensity of the attaching process and the pressing process in the winding step may be set as appropriate according to the material forming the rubber strip 95, etc.

In the above-described embodiment, in the winding step, the rubber strip 95 is wound on the base rubber 94, but the winding step is not limited to such a mode. For example, the attachment target object on which the rubber strip 95 is wound in the winding step may be a rubber material forming the raw cover, or may be a layer that is a base material of the rubber material of the raw cover. In addition, the attachment target object may be the forming drum 12.

One embodiment of the raw cover forming apparatus and the production method for a tire disclosed herein has been described above. However, the raw cover forming apparatus and the production method for a tire disclosed herein are not limited to the above-described embodiment. Hereinafter, modifications of the raw cover forming apparatus and the tire production method for a tire will be described.

### <Rotation Member 30B>

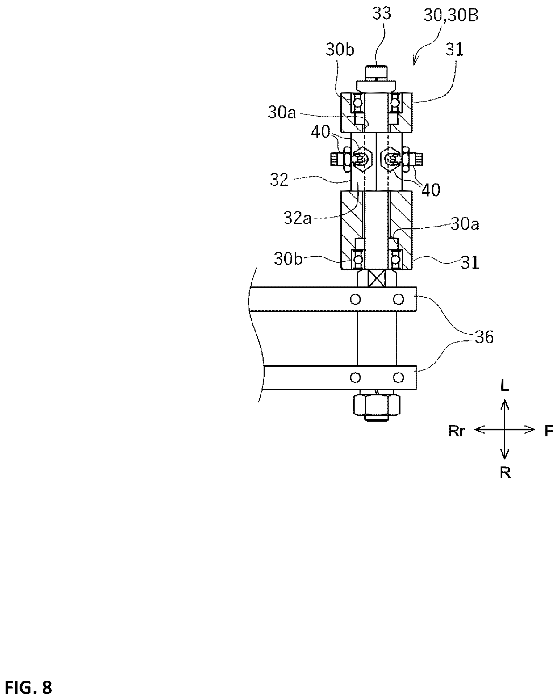

In the above-described embodiment, as shown in FIG. 5, the spike pins 40 in one row and the spike pins 40 in another row are alternately arranged on the six flat surfaces 32a which are aligned in the circumferential direction. However, the arrangement of the spike pins 40 is not limited to such a mode. FIG. 8 is a schematic diagram of a rotation member 30B. As shown in FIG. 8, in the rotation member 30B, the spike pins 40 are arranged at the same position in the circumferential direction of the rotation member 30B. The number of spike pins 40 and the shapes of the flat surfaces on which the spike pins 40 are provided are the same as in the rotation member 30A.

According to the trials by the present inventors, it is found that the rubber strip 95 attached to the base rubber 94 is less likely to be peeled with the arrangement in which the spike pins 40 are arranged at the same position in the circumferential direction as in the rotation member 30B, than with the arrangement in which the spike pins 40 are alternately arranged as in the rotation member 30A (see FIG. 5). By arranging the spike pins 40 at the same position in the circumferential direction, the pressure-bonding strength of the rubber strip 95 to the attachment target object is improved. Therefore, even in the case where the spike pins 40 are provided in a plurality of rows along the axial direction, when the spike pins 40 are provided at the same position in the circumferential direction in the row adjacent to each other along the axial direction, the pressure-bonding strength of the rubber strip 95 to the attachment target object can be improved.

### <Spike Pins 41>

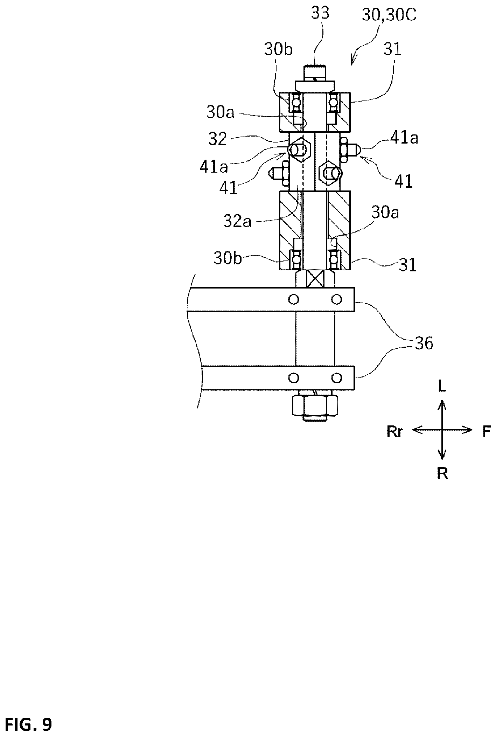

In the embodiment shown in FIG. 5, each spike pin 40 has the base portion 40a, the root portion 40b, and the distal end portion 40c. The flat portion 40c1 at the distal end and the cross-section of the distal end portion 40c are formed in a polygonal shape (star shape). However, the spike pin 40 is not limited to such a mode. FIG. 9 is a schematic diagram of a rotation member 30C in which spike pins 41 are used. The configuration of the rotation member 30C is the same as that of the rotation member 30A except for the spike pins 41. As shown in FIG. 9, a distal end portion 41a of each spike pin 41 has a conical shape that is gradually tapered toward the distal end thereof. The distal end of the spike pin 41 is formed so as to be slightly flattened. Since the spike pin 41 is tapered toward the distal end thereof, the rubber strip 95 can be attached to the attachment target object in a state where deformation of the rubber strip 95 is suppressed.

### <Plate 50>

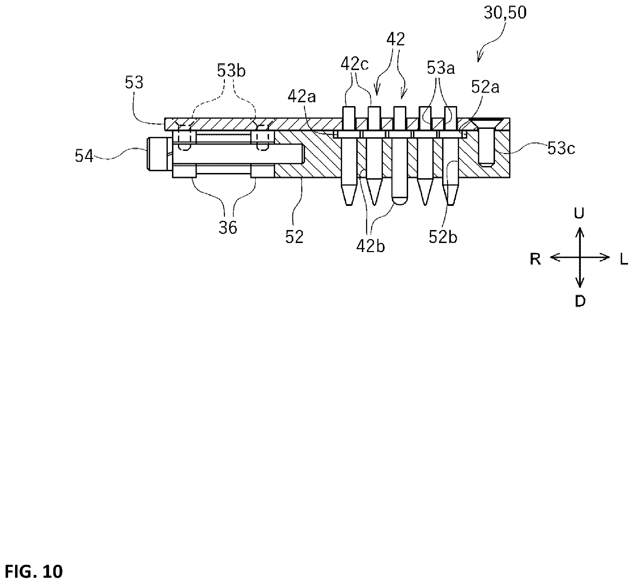

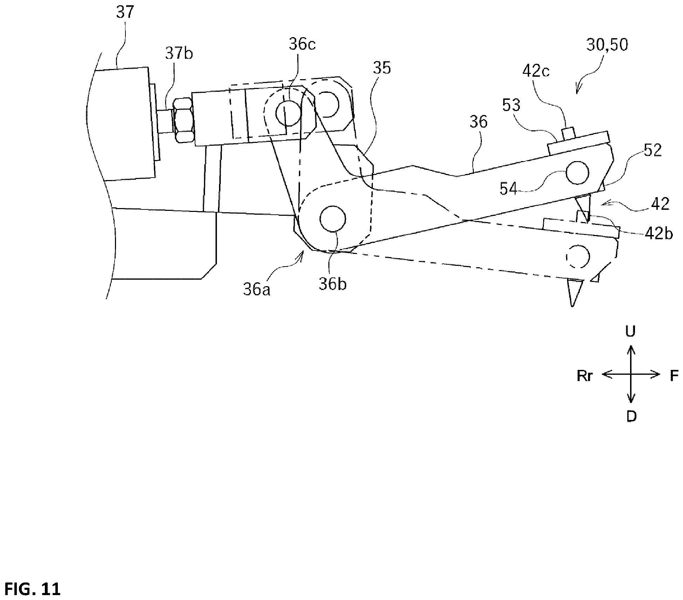

The pressing member 30 may be a plate 50 provided with spike pins 42. The plate 50 is a member that can be raised and lowered in the up-down direction with respect to the rubber strip 95 when the rubber strip 95 is transported. FIG. 10 is a schematic diagram of the plate 50. In FIG. 10, a cross-section of the plate 50 as seen in the transport direction of the rubber strip 95 is shown. FIG. 11 is a side view of the plate 50. FIG. 11 schematically shows a state where the plate 50 is raised or lowered. In FIG. 11, similar to FIG. 4, the state where the plate 50 as the pressing member 30 is raised to an uppermost position is shown by a solid line, and the state where the plate 50 is lowered to a lowermost position is shown by an alternate long and two short dashes line. As shown in FIG. 10, one end portion of the plate 50 is mounted on arms 36 by a bolt 54.

The plate 50 includes a base 52, spike pins 42, and a lid 53. In this embodiment, the plate 50 includes five spike pins 42 aligned at equal intervals in the width direction. The distal end of each spike pin 42 is provided at a position opposing the attachment target object (in this embodiment, the base rubber 94).

The base 52 of the plate 50 has a quadrangular column shape. The base 52 is fixed to the arm 36 by the bolt 54. The base 52 has a recess 52a, for mounting the spike pins 42, which is formed at the upper end thereof. Insertion holes 52b through which the spike pins 42 are inserted are formed from the bottom of the recess 52a. The inner diameter of each insertion hole 52b is set to a dimension corresponding to the outer diameter of the spike pin 42. The number of insertion holes 52 formed is not particularly limited, and is equal to that of the spike pins 42 in this embodiment.

Each spike pin 42 has a base portion 42a, a distal end portion 42b which extends downward from the base portion 42a, and a rear end portion 42c which extends from the base portion 42a toward the side opposite to the distal end portion 42b. The distal end portion 42b is formed so as to be longer than the insertion hole 52b which is provided in the base 52. Therefore, the distal end portion 42b protrudes from the lower end of the base 52. The base portion 42a is formed so as to have a larger diameter than the distal end portion 42b of the spike pin 42. The height of the base portion 42a along the longitudinal length of the spike pin is equal to the depth of the recess 52a.

It is possible to change the shape of each of the five spike pins 42. In this embodiment, the distal end of the innermost spike pin 42 is formed in a hemispherical shape. The two spike pins 42 on the outer side of the innermost spike pin 42 are tapered toward the distal ends thereof, and the distal ends thereof are slightly rounded. The two outermost spike pins 42 are tapered toward the distal ends thereof, and the distal ends thereof are formed so as to be flat. The lengths by which the five spike pins 42 protrude downward from the base 52 of the plate 50 are set to be equal to each other.

In the plate 50, the lid 53 is closed in a state where the spike pins 42 are inserted through the base 52. In this embodiment, since the height of the base portion 42a and the depth of the recess 52a of the base 52 are equal to each other, when the lid 53 is closed, the base portion 42a is fixed such that the base portion 42a does not move in the up-down direction. The lid 53 has insertion holes 53a through which the rear end portions 42c of the spike pins 42 are inserted. Each insertion hole 53a is formed so as to be slightly larger than the rear end portion 42c. By inserting the rear end portions 42c through the insertion holes 53a, it becomes difficult for the spike pins 42 to move in the radial direction. In addition, it becomes easy to position the lid 53 in place. In this state, the lid 53 is fixed to the base 52 and the arms 36 by bolts 53b and 53c.

In the attaching process of the winding step, the spike pins 42 of the plate 50 are pressed against the rubber strip 95 wound along the outer circumferential surface of the attachment target object. As shown in FIG. 11, when the piston rod 37b of the cylinder mechanism 37 is retracted, the plate 50 is raised with respect to the forming drum 12. When the piston rod 37b of the cylinder mechanism 37 is extended, the plate 50 is lowered with respect to the forming drum 12. Accordingly, the spike pins 42 are pressed against the rubber strip 95. The spike pins 42 can be intermittently pressed against the rubber strip 95 at required intervals. Therefore, the plate 50 can be repeatedly and intermittently raised and lowered during the transport of the rubber strip 95. The cylinder mechanism 37 can be controlled by a control device, which is not shown, such that the plate 50 is raised and lowered.

In this embodiment, the pressing member 30 is the plate 50 provided with the spike pins 42. In the attaching process of the winding step, the spike pins 42 of the plate 50 are pressed against the rubber strip 95 wound along the outer circumferential surface of the attachment target object. Accordingly, the pressure-bonding strength of the rubber strip 95 to the attachment target object can be improved.

The configuration of the plate 50 is not limited to the above-described mode unless otherwise specified. For example, the shape of each spike pin 42 is not limited to the above-described mode, and can be changed as appropriate. The shape of the distal end portion 42b, of the spike pin 42, which is pressed against the rubber strip 95 can be set as appropriate according to the material and shape of the rubber strip 95, the type of the attachment target object, etc. For example, the shape of the distal end portion 40c of the spike pin 40 or the distal end portion 41a of the spike pin 41 can be adopted as the shape of the distal end portion 42b of the spike pin 42.

The plate 50 is provided with the spike pins 42 in one row along the longitudinal direction of the plate 50, but is not limited to such a mode. For example, the spike pins 42 may be provided in a plurality of rows along the longitudinal direction of the plate 50, and may be provided, for example, in two to five rows.

The raw cover forming apparatus and the production method for a tire disclosed herein and the modifications thereof have been described above in various ways. However, the raw cover forming apparatus and the production method for a tire disclosed herein are limited only by the appended claims. In addition, the configurations of the various embodiments described can be appropriately combined as long as the configurations do not interfere with each other.

## Claims

1. A production method for a tire, comprising a winding step of winding a rubber strip (95) fed toward a forming drum (12), along an attachment target object (94), wherein
the winding step includes an attaching process of pressing spike pins (40, 41, 42) against the rubber strip (95) fed toward the forming drum (12) to attach the rubber strip (95) along an outer circumferential surface of the attachment target object (94), in at least a part of the winding step,
**characterized in that**
the winding step includes a pressing process of pressing the rubber strip (95) fed toward the forming drum (12), against the attachment target object (94) by a pressing roller (60), and
the attaching process is executed after the rubber strip (95) is pressed against the attachment target object (94) in the pressing process.

2. The production method for a tire according to claim 1, wherein, in the winding step, the attaching process is executed at start of winding the rubber strip (95) fed toward the forming drum (12), along the attachment target object (94), and is not executed in a middle of the winding step.

3. The production method for a tire according to claim 1 or 2, wherein, in the winding step, the attaching process is not executed in the middle of the winding step, and is executed at end of winding the rubber strip (95) fed toward the forming drum (12), along the attachment target object (94).

4. The production method for a tire according to any one of claims 1 to 3, wherein, in the attaching process, a rotation member (30A, 30B, 30C) provided with the spike pins (40, 41) on an outer circumferential surface thereof is pressed against the rubber strip (95) wound along the outer circumferential surface of the attachment target object (94).

5. The production method for a tire according to any one of claims 1 to 3, wherein, in the attaching process, a plate (50) provided with the spike pins (42) is pressed against the rubber strip (95) wound along the outer circumferential surface of the attachment target object (94).

6. The production method for a tire according to any one of claims 1 to 5, wherein the spike pins (40, 41, 42) each have a flat portion (40c1) at a distal end thereof.

7. The production method for a tire according to claim 6, wherein a shape of the flat portion (40c1) is a polygonal shape.

8. The production method for a tire according to claim 6 or 7, wherein the shape of the flat portion (40c1) has a protrusion (40c2) protruding toward a radially outward direction.

9. A raw cover forming apparatus comprising:
a feeding device (20) configured to feed a rubber strip (95) toward a forming drum (12); and
a pressing member (30) provided downstream of the feeding device (20) in a feeding direction of the rubber strip (95), wherein
the pressing member (30) is provided with a plurality of spike pins (40, 41, 42) for pressing the rubber strip (95) against an attachment target object (94),
**characterized in that**
the raw cover forming apparatus further comprises a pressing roller (60), provided between the feeding device (20) and the pressing member (30) and adapted for pressing the rubber strip (95) fed toward the forming drum (12) against the attachment target object (94) before the rubber strip (95) is pressed against the attachment target object (94) by the plurality of spike pins (40, 41, 42).

10. The raw cover forming apparatus according to claim 9, wherein
the pressing member (30) is a rotation member (30A, 30B, 30C) which is rotatable along the feeding direction, and
the plurality of spike pins (40, 41) are provided on an outer circumferential surface of the rotation member (30A, 30B, 30C).

11. The raw cover forming apparatus according to claim 10, wherein the plurality of spike pins (40, 41) are provided in a plurality of rows along an axial direction of the rotation member (30A, 30B, 30C).

12. The raw cover forming apparatus according to claim 11, wherein the spike pins (40, 41) are provided at the same position in a circumferential direction in the rows adjacent to each other along the axial direction.

13. The raw cover forming apparatus according to claim 11, wherein the spike pins (40, 41) are provided at positions different from each other in a circumferential direction, in the rows adjacent to each other along the axial direction.

14. The raw cover forming apparatus according to claim 9, wherein
the pressing member (30) is a plate (50) provided with the spike pins (42), and
the plurality of spike pins (42) are provided at positions, in the plate (50), opposing the attachment target object (94).

15. The raw cover forming apparatus according to any one of claims 9 to 14, wherein the spike pins (40, 41, 42) each have a flat portion (40c1) at a distal end thereof.

16. The raw cover forming apparatus according to claim 15, wherein a shape of the flat portion (40c1) is a polygonal shape.

17. The raw cover forming apparatus according to claim 15 or 16, wherein the shape of the flat portion (40c1) has a protrusion (40c2) protruding toward a radially outward direction.

18. The raw cover forming apparatus according to any one of claims 9 to 17, wherein the height of the pressing roller (60) with respect to the forming drum (12) is changeable.

19. The raw cover forming apparatus according to any one of claims 9 to 18, wherein the spike pins (40, 41, 42) are each formed so as to be longer than a thickness of the rubber strip (95).

## Patentansprüche

1. Herstellungsverfahren für einen Reifen, umfassend einen Wickelschritt eines Wickelns eines Kautschukstreifens (95), der einer Formungstrommel (12) zugeführt wird, entlang eines Befestigungszielobjekts (94), wobei
der Wickelschritt einen Befestigungsprozess eines Drückens von Stachelstiften (40, 41, 42) gegen den Kautschukstreifen (95), der der Formungstrommel (12) zugeführt wird, um den Kautschukstreifen (95) entlang einer Außenumfangsfläche des Befestigungszielobjekts (94) zu befestigen, in mindestens einem Teil des Wickelschritts umfasst,
**dadurch gekennzeichnet, dass**
der Wickelschritt einen Pressprozess eines Pressens des Kautschukstreifens (95), der der Formungstrommel (12) zugeführt wird, gegen das Befestigungszielobjekt (94) durch eine Presswalze (60) umfasst, und
der Befestigungsprozess ausgeführt wird, nachdem der Kautschukstreifen (95) in dem Pressprozess gegen das Befestigungszielobjekt (94) gepresst worden ist.

2. Herstellungsverfahren für einen Reifen nach Anspruch 1, wobei in dem Wickelschritt der Befestigungsprozess zu Beginn des Wickelns des Kautschukstreifens (95), der der Formungstrommel (12) zugeführt wird, entlang des Befestigungszielobjekts (94) ausgeführt wird, und nicht in einer Mitte des Wickelschritts ausgeführt wird.

3. Herstellungsverfahren für einen Reifen nach Anspruch 1 oder 2, wobei in dem Wickelschritt der Befestigungsprozess nicht in der Mitte des Wickelschritts ausgeführt wird und am Ende des Wickelns des Kautschukstreifens (95), der der Formungstrommel (12) zugeführt wird, entlang des Befestigungszielobjekts (94) ausgeführt wird.

4. Herstellungsverfahren für einen Reifen nach einem der Ansprüche 1 bis 3, wobei in dem Befestigungsprozess ein Drehelement (30A, 30B, 30C), das mit den Stachelstiften (40, 41) an einer Außenumfangsfläche davon versehen ist, gegen den Kautschukstreifen (95) gepresst wird, der entlang der Außenumfangsfläche des Befestigungszielobjekts (94) gewickelt wird.

5. Herstellungsverfahren für einen Reifen nach einem der Ansprüche 1 bis 3, wobei in dem Befestigungsprozess eine Platte (50), die mit den Stachelstiften (42) versehen ist, gegen den Kautschukstreifen (95) gepresst wird, der entlang der Außenumfangsfläche des Befestigungszielobjekts (94) gewickelt ist.

6. Herstellungsverfahren für einen Reifen nach einem der Ansprüche 1 bis 5, wobei die Stachelstifte (40, 41, 42) jeweils einen flachen Abschnitt (40c1) an einem distalen Ende davon aufweisen.

7. Herstellungsverfahren für einen Reifen nach Anspruch 6, wobei die Form des flachen Abschnitts (40c1) eine polygonale Form ist.

8. Herstellungsverfahren für einen Reifen nach Anspruch 6 oder 7, wobei die Form des flachen Abschnitts (40c1) einen Vorsprung (40c2) aufweist, der in eine Richtung radial nach außen vorsteht.

9. Rohabdeckungsformungsvorrichtung, umfassend:
eine Zuführvorrichtung (20), die konfiguriert ist, um einen Kautschukstreifen (95) einer Formungstrommel (12) zuzuführen; und
ein Presselement (30), das stromabwärts der Zuführvorrichtung (20) in einer Zuführrichtung des Kautschukstreifens (95) vorgesehen ist, wobei
das Presselement (30) mit einer Vielzahl von Stachelstiften (40, 41, 42) zum Pressen des Kautschukstreifens (95) gegen ein Befestigungszielobjekt (94) vorgesehen ist,
**dadurch gekennzeichnet, dass**
die Rohabdeckungsformungsvorrichtung ferner eine Presswalze (60) umfasst, die zwischen der Zuführvorrichtung (20) und dem Presselement (30) vorgesehen ist und angepasst ist, um den Kautschukstreifen (95), der der Formungstrommel (12) zugeführt wird, gegen das Befestigungszielobjekt (94) zu pressen, bevor der Kautschukstreifen (95) gegen das Befestigungszielobjekt (94) durch die Vielzahl von Stachelstiften (40, 41, 42) gepresst wird.

10. Rohabdeckungsformungsvorrichtung nach Anspruch 9, wobei
das Presselement (30) ein Drehelement (30A, 30B, 30C) ist, das entlang der Zuführrichtung drehbar ist, und
die Vielzahl von Stachelstiften (40, 41) an einer Außenumfangsfläche des Drehelements (30A, 30B, 30C) vorgesehen ist.

11. Rohabdeckungsformungsvorrichtung nach Anspruch 10, wobei die Vielzahl von Stachelstiften (40, 41) in einer Vielzahl von Reihen entlang einer axialen Richtung des Drehelements (30A, 30B, 30C) vorgesehen ist.

12. Rohabdeckungsformungsvorrichtung nach Anspruch 11, wobei die Stachelstifte (40, 41) an der gleichen Position in einer Umfangsrichtung in den Reihen nebeneinander entlang der axialen Richtung vorgesehen sind.

13. Rohabdeckungsformungsvorrichtung nach Anspruch 11, wobei die Stachelstifte (40, 41) an voneinander verschiedenen Positionen in einer Umfangsrichtung in den Reihen nebeneinander entlang der axialen Richtung vorgesehen sind.

14. Rohabdeckungsformungsvorrichtung nach Anspruch 9, wobei
das Presselement (30) eine Platte (50) ist, die mit den Stachelstiften (42) versehen ist, und
die Vielzahl von Stachelstiften (42) an Positionen in der Platte (50) gegenüber dem Befestigungszielobjekt (94) vorgesehen sind.

15. Rohabdeckungsformungsvorrichtung nach einem der Ansprüche 9 bis 14, wobei die Stachelstifte (40, 41, 42) jeweils einen flachen Abschnitt (40c1) an einem distalen Ende davon aufweisen.

16. Rohabdeckungsformungsvorrichtung nach Anspruch 15, wobei eine Form des flachen Abschnitts (40c1) eine polygonale Form ist.

17. Rohabdeckungsformungsvorrichtung nach Anspruch 15 oder 16, wobei die Form des flachen Abschnitts (40c1) einen Vorsprung (40c2) aufweist, der in eine Richtung radial nach außen vorsteht.

18. Rohabdeckungsformungsvorrichtung nach einem der Ansprüche 9 bis 17, wobei die Höhe der Presswalze (60) in Bezug auf die Formungstrommel (12) veränderbar ist.

19. Rohabdeckungsformungsvorrichtung nach einem der Ansprüche 9 bis 18, wobei die Stachelstifte (40, 41, 42) jeweils so geformt sind, dass sie länger als eine Dicke des Kautschukstreifens (95) sind.

## Revendications

1. Procédé de production pour un pneumatique, comprenant une étape d'enroulage consistant à enrouler une bande de caoutchouc (95) alimentée vers un tambour de formage (12), le long d'un objet cible de fixation (94), dans lequel
l'étape d'enroulage inclut un processus de fixation consistant à presser des dents (40, 41, 42) contre la bande de caoutchouc (95) alimentée vers le tambour de formage (12) pour fixer la bande de caoutchouc (95) le long d'une surface circonférentielle extérieure de l'objet cible de fixation (94), dans une partie au moins de l'étape d'enroulage,
**caractérisé en ce que**
l'étape d'enroulage inclut un processus de pressage consistant à presser la bande de caoutchouc (95) alimentée vers le tambour de formage (12) contre l'objet cible de fixation (94) au moyen d'un rouleau de pressage (60), et
le processus de fixation est exécuté après que la bande de caoutchouc (95) est pressée contre l'objet cible de fixation (94) dans le processus de pressage.

2. Procédé de production pour un pneumatique selon la revendication 1, dans lequel, dans l'étape d'enroulage, le processus de fixation est exécuté au début de l'enroulage de la bande de caoutchouc (95) alimentée vers le tambour de formage (12), le long de l'objet cible de fixation (94), et n'est pas exécuté au milieu de l'étape d'enroulage.

3. Procédé de production pour un pneumatique selon la revendication 1 ou 2, dans lequel, dans l'étape d'enroulage, le processus de fixation n'est pas exécuté au milieu de l'étape enroulage, et est exécuté à la fin de l'enroulage de la bande de caoutchouc (95) alimentée vers le tambour de formage (12), le long de l'objet cible de fixation (94).

4. Procédé de production pour un pneumatique selon l'une quelconque des revendications 1 à 3, dans lequel, dans le processus de fixation, un élément en rotation (30A, 30B, 30C) doté des dents (40, 41) sur une surface circonférentielle extérieure de celui-ci est pressé contre la bande de caoutchouc (95) enroulée le long de la surface circonférentielle extérieure de l'objet cible de fixation (94).

5. Procédé de production pour un pneumatique selon l'une quelconque des revendications 1 à 3, dans lequel, dans le processus de fixation, une plaque (50) dotée des dents (42) est pressée contre la bande de caoutchouc (95) enroulée le long de la surface circonférentielle extérieure de l'objet cible de fixation (94).

6. Procédé de production pour un pneumatique selon l'une quelconque des revendications 1 à 5, dans lequel les dents (40, 41, 42) ont chacune une portion plate (40c1) à une extrémité distale de celle-ci.

7. Procédé de production pour un pneumatique selon la revendication 6, dans lequel une forme de la portion plate (40c1) est une forme polygonale.

8. Procédé de production pour un pneumatique selon la revendication 6 ou 7, dans lequel la forme de la portion plate (40c1) présente une protubérance (40c2) en saillie vers une direction radialement extérieure.

9. Appareil de formage de couverture crue comprenant :
un dispositif d'alimentation (20) configuré pour alimenter une bande de caoutchouc (95) vers un tambour de formage (12) ; et
un élément de pressage (30) prévu en aval du dispositif d'alimentation (20) dans une direction d'alimentation de la bande de caoutchouc (95), dans lequel
l'élément de pressage (30) est doté d'une pluralité de dents (40, 41, 42) pour presser la bande de caoutchouc (95) contre un objet cible de fixation (94),
**caractérisé en ce que**
l'appareil de formage de couverture crue comprend un rouleau de pressage (60), prévu entre le dispositif d'alimentation (20) et l'élément de pressage (30) et adapté pour presser la bande de caoutchouc (95) alimentée vers le tambour de formage (12) contre l'objet cible de fixation (94) avant que la bande de caoutchouc (95) soit pressée contre l'objet cible de fixation (94) au moyen de la pluralité de dents (40, 41, 42).

10. Appareil de formage de couverture crue selon la revendication 9, dans lequel
l'élément de pressage (30) est un élément en rotation (30A, 30B, 30C) qui peut être mis en rotation le long de la direction d'alimentation, et
la pluralité de dents (40, 41) sont prévues sur une surface circonférentielle extérieure de l'élément en rotation (30A, 30B, 30C).

11. Appareil de formage de couverture crue selon la revendication 10, dans lequel la pluralité de dents (40, 41) sont prévues dans une pluralité de rangées le long d'une direction axiale de l'élément en rotation (30A, 30B, 30C).

12. Appareil de formage de couverture crue selon la revendication 11, dans lequel les dents (40, 41) sont prévues à la même position dans une direction circonférentielle dans les rangées adjacentes les unes aux autres le long de la direction axiale.

13. Appareil de formage de couverture crue selon la revendication 11, dans lequel les dents (40, 41) sont prévues à des positions différentes les unes des autres dans une direction circonférentielle, dans les rangées adjacentes les unes aux autres le long de la direction axiale.

14. Appareil de formage de couverture crue selon la revendication 9, dans lequel
l'élément de pressage (30) est une plaque (50) dotée des dents (42), et
la pluralité de dents (42) sont prévues à des positions, dans la plaque (50), en opposition à l'objet cible de fixation (94).

15. Appareil de formage de couverture crue selon l'une quelconque des revendications 9 à 14, dans lequel les dents (40, 41, 42) ont chacune une portion plate (40c1) à une extrémité distale de celles-ci.

16. Appareil de formage de couverture crue selon la revendication 15, dans lequel une forme de la portion plate (40c1) est une forme polygonale.

17. Appareil de formage de couverture brute selon la revendication 15 ou 16, dans lequel la forme de la portion plate (40c1) présente une protubérance (40c2) en saillie vers une direction radialement extérieure.

18. Appareil de formage de couverture brute selon l'une quelconque des revendications 9 à 17, dans lequel la hauteur du rouleau de pressage (60) par rapport au tambour de formage (12) peut être changée.

19. Appareil de formage de couverture brute selon l'une quelconque des revendications 9 à 18, dans lequel les dents (40, 41, 42) sont chacune formées de manière à être plus longues qu'une épaisseur de la bande de caoutchouc (95).
